# EUROPEAN PATENT APPLICATION

(11) **EP 2 258 816 A1**
(43) Date of publication of application: **08.12.2010**
(21) Application number: 08872724.3
(22) Date of filing: 31.10.2008
(51) Int. Cl.: C10L 5/44, B09B 3/00

(54) **SOLID FUEL AND METHOD OF PRODUCING SOLID FUEL**

(30) Priority: 18.02.2008 JP 2008035984
(71) Applicant: Kuriyama, Shinsuke, Abiko-shi, Chiba 270-1176 (JP); Takahashi, Hidehisa, Chiba-shi, Chiba 260-0804 (JP); Takiguchi, Kazunori, Koto-ku Tokyo 135-0024 (JP)
(72) Inventor: The designation of the inventor has not yet been filed
(74) Representative: Kühn, Ralph
(86) International application number: PCT/JP2008/069952
(87) International publication number: WO 2009/104311

(57) **Abstract**

[PROBLEMS] To provide a solid fuel which is usable as a substitute fuel for living trees, petroleum and so on.

[MEANS FOR SOLVING PROBLEMS] A method of producing a solid fuel which comprises the first step of heating beer lees under agitation and the second step of heating and compression-molding the beer lees, which have been agitated in the first step, into the shape of the solid fuel, **characterized in that** the beer lees are heated while preventing carbonization in the second step. According to this method, it is possible to produce a wood fuel which satisfies the industrial standards, is eco-friendly, has stable qualities and enables easy flame regulation. Since the solid fuel can be obtained merely by agitating, heating and compressing beer lees, the production process can be simplified. Moreover, the evolution of fire sparks or eye-irritative smoke can be avoided. Furthermore, it is possible to provide a sensorily favorable solid fuel releasing a spicy savor of barley.

## Description

### TECHNICAL FIELD

The present invention relates to a solid fuel which may be used in thermal power generation equipment, boilers, stone ovens, smokers, wood stoves and ascending kilns for ceramics, and a method of producing such a solid fuel.

### BACKGROUND ART

Firewood which is known as a solid fuel is used as a fuel for cooking and warming, and is an important fuel source in stone ovens and wood stoves for baking pizza and bread.

In the ceramic industry, firewood is used in the firing process of pottery, porcelain and brick produced by traditional techniques, and many ceramists are paying a special attention to wood to create subtle shades from firing at non-uniform temperatures.

Living trees which are used as a material of firewood absorb carbon dioxide and release oxygen in the photosynthesis and are therefore an extremely important natural resource to protect the global environment. Accordingly, use of firewood made from living trees should be avoided as much as possible.

Living trees which serve as a material of firewood contain nearly 50% of moisture and must be dried to a moisture content of around 15% to burn them as firewood. If insufficiently dried firewood is burnt, a large amount of tar or soot may occur. The standards management is only directed to cut wood into the same length, and the quality is uneven and varies considerably from firewood to firewood. Flame regulation is therefore difficult.

On the other hand, there is also a method in which sawdust is used as a material to be formed into a firewood shape and is employed as a fuel. Flame can be easily regulated when sawdust is used as firewood because the moisture is controlled during the processing and firewood of the same size can be industrially produced. Firewood obtained from a sawdust material is also a recycled product. However, sawdust is originally obtained from living trees and is therefore a resource only obtained after cutting trees useful for reducing CO₂ emissions. In addition, burning causes the volatile components inherent in living trees to generate disagreeable eye-smarting smoke. It is expensive only to collect enough sawdust to distribute as firewood. Sawdust is considerably distinct from beer lees which are wastes generated in large amounts in beer factories.

Patent Document 1 discloses a forming device for carbonizing beer lees, but it is clear that the beer lees formed by the forming device is a carbonaceous material, is less flammable and is therefore not a good solid fuel. In other words, it is clear that this type of carbonaceous material is excellent in the function of adhering an adsorbent or microorganism thereto and growing the adhered adsorbent or microorganism (see Non-Patent Document 1), but has low burning performance.
Patent Document 1: JP 2000-33496 A
Non-Patent Document 1: Search on the Internet, October 30, 2008; [http://www.japan-hp.com/ksd_hako.html]

### DISCLOSURE OF THE INVENTION

### PROBLEMS TO BE SOLVED BY THE INVENTION

Accordingly, it has been required to develop a solid fuel that may be used as a substitute fuel for living trees, coal, petroleum and the like.

### MEANS FOR SOLVING THE PROBLEMS

In order to solve the above-described problems, the solid fuel of the present invention is characterized by the inclusion of particulate beer lees heat-treated while preventing carbonization. This solid fuel can be prepared by heating beer lees under agitation and compression-molding the agitated beer lees under heating into a solid fuel shape.

### EFFECTS OF THE INVENTION

The present invention can provide a solid fuel which has excellent burning characteristics and may be substituted for firewood obtained by drying living trees.

### BEST MODE FOR CARRYING OUT THE INVENTION

The present invention is **characterized in that** beer lees are used as a solid fuel material. The usage of living trees that have been used as a material of a solid fuel (firewood) is greatly limited in terms of CO₂ reduction, and a sufficient amount of sawdust to distribute it as firewood cannot be obtained from a living tree material.

In contrast, beer lees are wastes from the production of beer. Beer factories producing beer which is a universal beverage are constructed all over the world. Therefore, a large amount of beer lees can be obtained everyday even from one beer factory, which enables transportation costs and CO₂ emissions resulting from transportation to be considerably reduced. Beer lees are considerably distinct from petroleum which is produced only in some areas including the Middle East and involves transportation for its supply.

In addition, in cold regions, every home may often have at least one fireplace for burning firewood. Therefore, a solid fuel made from beer lees can be directly put in the fireplace and burnt to keep warm. Therefore, it is not necessary to convert energy obtained from burning into electric power, which enables infrastructural problems to be reduced. Beer lees are also considerably distinct from fuel cells which require hydrogen filling stations.

The solid fuel made from beer lees has thus a lot of more excellent properties than conventional energy sources. As will be described later, the solid fuel made from beer lees has more excellent burning performance than that made from living trees and may be a substitute for the latter.

A method of producing a solid fuel made from beer lees is described below in detail.

The solid fuel production method of the present invention is first described by reference to FIGS. 1, 2 and 3. FIG. 1 is a schematic view of a solid fuel production device for effectively implementing the production method. FIG. 2 is a cross-sectional view of an agitation and molding portion making up part of the solid fuel production device. FIG. 3 is an exploded perspective view of the agitation and molding portion.

Now referring to these drawings, a hopper portion 20 is of a tapered shape in which the diameter size gradually decreases toward the bottom side and is connected to an inlet 11a formed in a housing body 11 of an agitation and molding portion 10.

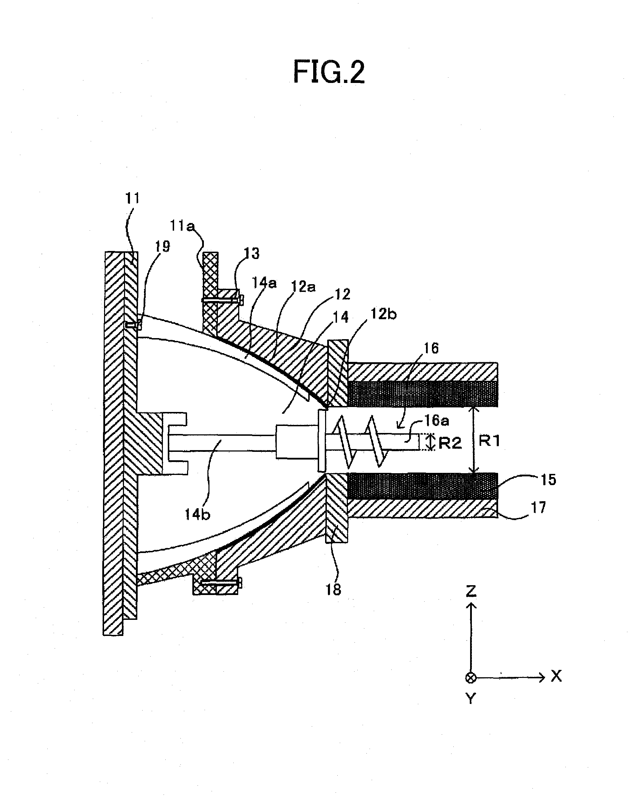

As shown in FIG. 2, the housing body 11 of the agitation and molding portion 10 is formed in a cylindrical shape and a hemispherical edge housing 12 is fixed via fixing bolts 13 to one end of the housing body 11 in the horizontal direction (X-axis direction).

A plurality of (ten in this embodiment) inner blades 12a having a helix angle are formed at the inner surface of the edge housing 12 and a discharge port 12b for discharging beer lees is formed at the distal end of the edge housing 12. The proximal end of the edge housing 12 is fixed via fixing bolts 19 to the housing body 11.

A rotor 14 is rotatably accommodated in the edge housing 12 and outer blades 14a having a helix angle are formed at the outer surface of the rotor 14. The outer blades 14a of the rotor 14 are twisted in the opposite direction with respect to the inner blades 12a of the edge housing 12.

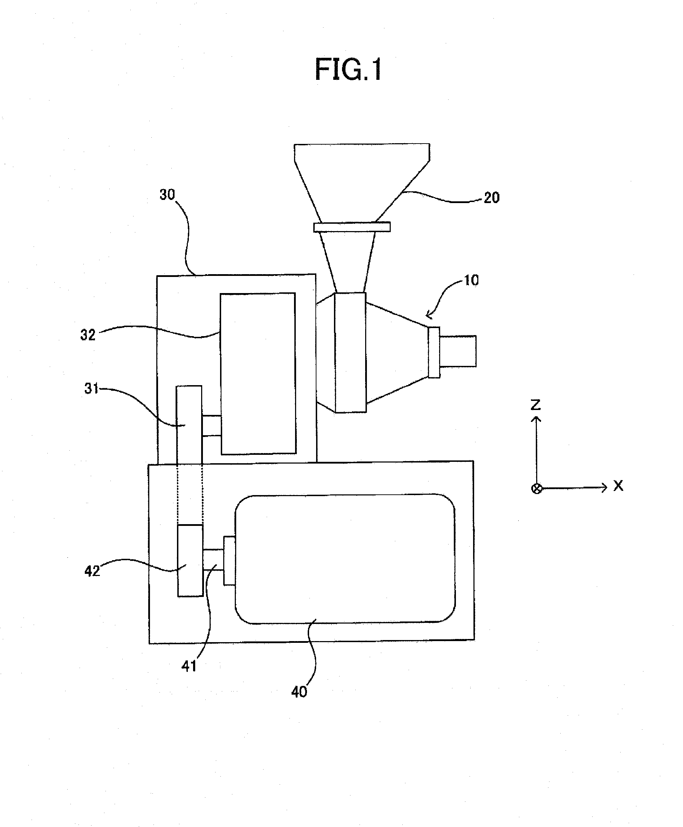

A rotating shaft 14b of the rotor 14 extends in the X-axis direction and is driven to rotate by the driving force transmitted from a motor 40 shown in FIG. 1. The drive mechanism of the rotor 14 is described later.

A sleeve 15 is formed in a cylindrical shape and extends in the X-axis direction. One end of the sleeve 15 in the X-axis direction is fixed to a flange portion 18 secured to the distal end of the edge housing 12.

An edge screw 16 which extends inside the sleeve portion 15 is attached to one end of the rotor 14 in the X-axis direction.

A screw shaft 16a of the edge screw 16 is disposed coaxially with the rotating shaft 14b of the rotor 14, and the drive force transmitted from the motor 40 causes the rotor 14 and the edge screw 16 to integrally rotate.

When the internal diameter of the sleeve 15 and the external diameter of the screw shaft 16a are represented by R1 and R2, respectively, R1-R2 is preferably from 0.3 to 0.5 mm and more preferably 0.3 mm. A heat generating cylinder 17 is disposed concentrically with the sleeve 15 on the outer peripheral surface of the sleeve 15. Heat transmitted from a heat source (not shown) causes the heat generating cylinder 17 to generate heat.

As shown in FIG. 1, a gear box 30 includes a first gear 31 and a second gear line 32 meshed with the first gear 31. The second gear line 32 is connected to the rotating shaft 14b of the rotor 14 and the rotor 14 rotates in response to the rotational operation of the second gear line 32.

An output gear 42 is attached to an output shaft 41 of the motor 40 and is connected to the first gear 31 accommodated in the gear box 30. Therefore, once the motor 40 is driven, the drive force can be transmitted to the output gear 42, the first gear 31 and the second gear line 32 in this order to rotate the rotor 14.

Next, the solid fuel production method using the above-described production device is described. The first step for producing beer includes crushing a malt which is a germinate barley material, boiling the crushed malted barley to obtain mash and extracting wort from the mash. This step is called mashing. In this step, wort is extracted to generate residues, which are generally called "beer lees."

The beer lees usually contain 60 to 75% of moisture and are dried or dehydrated to a moisture content of 1 to 15% before being charged into the housing 11 through the hopper 20. The upper limit is set to 15% because at a moisture content in excess of 15%, a large amount of moisture vapor is generated from the beer lees during the heating to excessively increase the internal pressure of the housing 11. The lower limit is set to 1% because at a moisture content of less than 1%, the compression-molded beer lees do not easily agglomerate and cannot be used as a solid fuel.

The dried beer lees are charged into the housing body 11 through the hopper 20. The feed rate of the beer lees to the housing body 11 is preferably at least 100 kg/h and more preferably at least 130 kg/h. At a feed rate of 100 kg/h or less, the solid fuel positioned inside the sleeve 15 is heated for a long time to carbonize the solid fuel surface. The feed rate of the beer lees may be suitably changed according to the device configuration of the production device from the viewpoint that the solid fuel surface should not be carbonized.

By the rotary action of the rotor 14, the beer lees fed to the housing body 11 is transferred to the discharge port 12b of the edge housing 12 through a gap formed between the rotor 14 and the edge housing 12. In this process, the particulate beer lees are brought into contact with each other to generate frictional heat, thus increasing the temperature of the beer lees.

Since the rotor 14 has the plurality of outer blades 14a formed at the outer surface thereof, the amount of beer lees transferred per revolution of the rotor 14 can be increased. On the other hand, the amount of beer lees fed from the edge housing 12 to the sleeve 15 can be limited by setting the internal diameter R1 of the sleeve 15 and the external diameter R2 of the screw shaft 16a as described above.

Enough frictional heat can be thus applied to the beer lees transferred within the edge housing 12. As a result, the temperature of the beer lees can be increased to a material temperature suitable for molding at the discharge port 12a of the edge housing 12. The material temperature suitable for molding of the beer lees is approximately 90°C or more.

The beer lees discharged from the discharge port 12a of the edge housing 12 are pushed into the sleeve 15 by the rotary action of the screw 16. The temperature at which the sleeve 15 is heated by the heat generating cylinder 17 is preferably from 250°C to 330°C (390°C at the time of preheating). At a heating temperature of less than 250°C, the solid fuel surface is increasingly cracked and the solid fuel is liable to break. At a heating temperature exceeding 330°C, a burnt thin (carbide) film is formed at the solid fuel surface.

The heating temperature of the sleeve 15 may be suitably changed according to the device configuration of the solid fuel production device. In this case, cracks generated in the solid fuel and a burnt thin film formed at the surface can be visually identified. Therefore, the optimal heating temperature can be empirically derived by adjusting the heating temperature of the sleeve 15 while visually observing the surface of the solid fuel discharged from the sleeve 15.

By the pushing action of the screw 16 into the sleeve 15, the beer lees within the sleeve 15 are compressed while contacting the inner surface of the sleeve 15 and the outer surface of the screw shaft 16a of the screw 16, transferred inside the sleeve 15 and discharged as a solid fuel.

As described above, particulate beer lees generated as a by-product during the production of beer can be used as a material to produce a solid fuel which is eco-friendly, has stable qualities, enables easy flame regulation and satisfies the industrial standards. Since the solid fuel is obtained only by agitating, heating and compressing the beer lees, the production process can be simplified. Moreover, the evolution of fire sparks or eye-smarting smoke can be avoided. Furthermore, it is possible to provide a sensorily favorable solid fuel releasing a spicy savor of barley.

### (Modified Embodiment)

The solid fuel may be flavored by charging into the agitation and molding portion 10 roasted coffee bean residues, particles obtained by pulverizing disused brewing barrels (e.g., sake barrel, wine barrel and whiskey barrel), residues after squeezing fruits (e.g., apple and mandarin orange), and hop residues after beer brewing in addition to the above-described beer lees.

### (Examples)

The present invention is described more specifically by way of examples.

Solid fuel A made from beer lees whose surfaces are not carbonized (hereinafter referred to as "Example") and Solid fuel B made from a barrel material (hereinafter referred to as "Comparative Example") were respectively subjected to fuel combustion experiments and compared with each other. More specifically, the flash point, the calorific power, the IMO burning velocity and the volatile components were determined to evaluate the fuel performance. A barrel material was used in Comparative Example. Firewood made from a barrel material is widely available in the market, can be easily purchased, and is therefore optimal to use as a comparative example for evaluating the burning characteristics of the solid fuel made from beer lees.

### (Flash Point)

The flash point was measured according to the manual for conducting tests for verifying hazardous substances under the Fire Service Act. More specifically, a closed-cup flash point tester was used as the flash point measuring instrument. The test was conducted in the Safety Engineering Laboratory, Ehime Office of Sumika Chemical Analysis Service, Ltd. The test conditions of Example included a temperature of 26°C, a humidity of 58% and an atmospheric pressure of 1008 hPa. The test was conducted on August 27, 2008. The test conditions of Comparative Example included a temperature of 24°C, a humidity of 51% and an atmospheric pressure of 1010 hPa. The test was conducted on August 25, 2008. The test results of Example were shown in Table 1 and those of Comparative Example were shown in Table 2.

### [Table 1]

**Table 1**

| Test name | Test for measuring flash point |
|---|---|
| Flash point measuring instrument | Closed-cup flash point tester |
| Date of test | August 27, 2008 |
| Place of test | Safety Engineering Laboratory, Ehime Office of Sumika Chemical Analysis Service, Ltd. |
| Test conditions | Temperature (26°C), humidity (58%), atmospheric pressure (1008 hPa) |
| Flash point | 217°C |

### [Table 2]

**Table 2**

| Test name | Test for measuring flash point |
|---|---|
| Flash point measuring instrument | Closed-cup flash point tester |
| Date of test | August 25, 2008 |
| Place of test | Safety Engineering Laboratory, Ehime Office of Sumika Chemical Analysis Service, Ltd. |
| Test conditions | Temperature (24°C), humidity (51%), atmospheric pressure (1010 hPa) |
| Flash point | 246°C |

The flash point in Example and that in Comparative Example were 217°C and 246°C, respectively, which showed that the solid fuel in Example has a lower flash point and more readily catch fire than the solid fuel in Comparative Example.

### (Calorific Power)

The calorific power was measured according to the JIS M 8814 manual. The test was conducted in the Safety Engineering Laboratory, Ehime Office of Sumika Chemical Analysis Service, Ltd. The test conditions included a temperature of 22°C, a humidity of 78% and an atmospheric pressure of 1007 hPa. The test results of Example were shown in Table 3 and those of Comparative Example were shown in Table 4.

**[Table 3]**

| Test name | Measurement of heat value (total calorific power) |
|---|---|
| Measurement method | JIS M 8814 |
| Date of test | August 27, 2008 |
| Place of test | Safety Engineering Laboratory, Ehime Office of Sumika Chemical Analysis Service, Ltd. |
| Test conditions | Temperature (22°C), humidity (78%), atmospheric pressure (1007 hPa) |
| Measurement result | 19940 J/g |

**[Table 4]**

| Test name | Measurement of heat value (total calorific power) |
|---|---|
| Measurement method | JIS M 8814 |
| Date of test | August 27, 2008 |
| Place of test | Safety Engineering Laboratory, Ehime Office of Sumika Chemical Analysis Service, Ltd. Service, Ltd. |
| Test conditions | Temperature (22°C), humidity (78%), atmospheric pressure (1007 hPa) |
| Measurement result | 18540 J/g |

The calorific power in Example and that in Comparative Example were 19940 J/g and 18540 J/g, respectively, which showed that the calorific power in Example is better than that in Comparative Example.

### (IMO Burning Velocity Experiment)

The IMO burning velocity was measured in the Safety Engineering Laboratory, Ehime Office of Sumika Chemical Analysis Service, Ltd. The test conditions included a temperature of 27°C and a humidity of 84%. The following criteria were applied to the evaluation method. More specifically, a case in which the burning velocity was 2.0 mm/sec or more was rated as having high flammability hazard, a case in which the burning velocity was higher than 0 mm/sec but less than 2. 0 mm/sec was rated as having medium flammability hazard, and a case in which the burning velocity was 0 mm/sec was rated as having low flammability hazard. A prism-shaped specimen with a total length of 250 mm, a width of 20 mm and a height of 10 mm was deposited on a heat insulation plate (with a thickness of 10 mm and a thermal conductivity at 0°C of up to 0.1 W/m·K) and one end of the specimen was fired by using a firing device for liquefied petroleum gas. The period of time it took for burning to further proceed over a length of 100 mm from the area of 120 mm where the reaction had previously taken place was measured. The test was repeated six times in both of Example and Comparative Example. The test results of Example are shown in Table 5 and those of Comparative Example are shown in Table 6.

**[Table 5]**

| No. | Time required to burn length of 100 mm (sec) | Burning velocity (mm/sec) | Flammability hazard (reference) |
|---|---|---|---|
| 1 | Burning does not continue | 0 | low |
| 2 | Burning does not continue | 0 | low |
| 3 | Burning does not continue | 0 | low |
| 4 | Burning does not continue | 0 | low |
| 5 | Burning does not continue | 0 | low |
| 6 | Burning does not continue | 0 | low |
| Average | Burning does not continue | 0 | low |

**[Table 6]**

| No. | Time required to burn length of 100 mm (sec) | Burning velocity (mm/sec) | Flammability hazard (reference) |
|---|---|---|---|
| 1 | 1665 | 0.06 | medium |
| 2 | 1658 | 0.06 | medium |
| 3 | 1685 | 0.06 | medium |
| 4 | 1697 | 0.06 | medium |
| 5 | 1641 | 0.06 | medium |
| 6 | 1683 | 0.06 | medium |
| Average | 1672 | 0.06 | medium |

It was revealed that Example had a lower burning velocity and therefore a lower flammability hazard than Comparative Example. In other words, it was revealed that the fuel in Example burns longer, is more safe and is easier in handling than that in Comparative Example.

### (Volatile Component)

The solid fuels in Example and Comparative Example were burnt in a burning device JIS K 7217. Gases generated during the burning were collected in a Tedlar bag and the collected gases were determined by gas chromatography (GC/TCD). The combustion gas generator used was PCT-1 available from Sugiyama -Gen Co., Ltd. The temperature was set to 750°C. Air was used for the combustion supporting gas. The combustion supporting gas was fed at a feed rate of 0.5 L/min. The gas chromatograph used was GC-14B available from Shimadzu Corporation. The analysis results are shown in Tables 7 and 8. Table 7 shows data of Example, and the vertical axis and horizontal axis represent component amount and time, respectively. Table 8 shows data of Comparative Example, and the vertical axis and horizontal axis represent component amount and time, respectively.

### [Table 7]

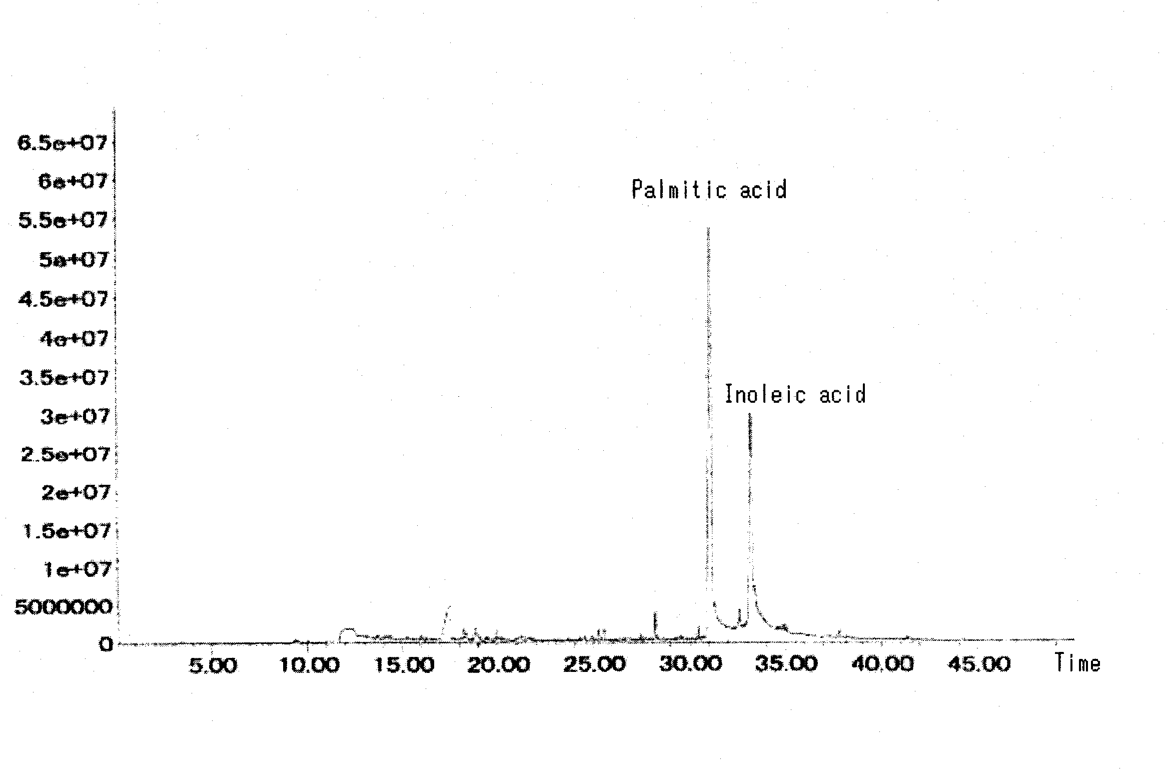

### [Table 8]

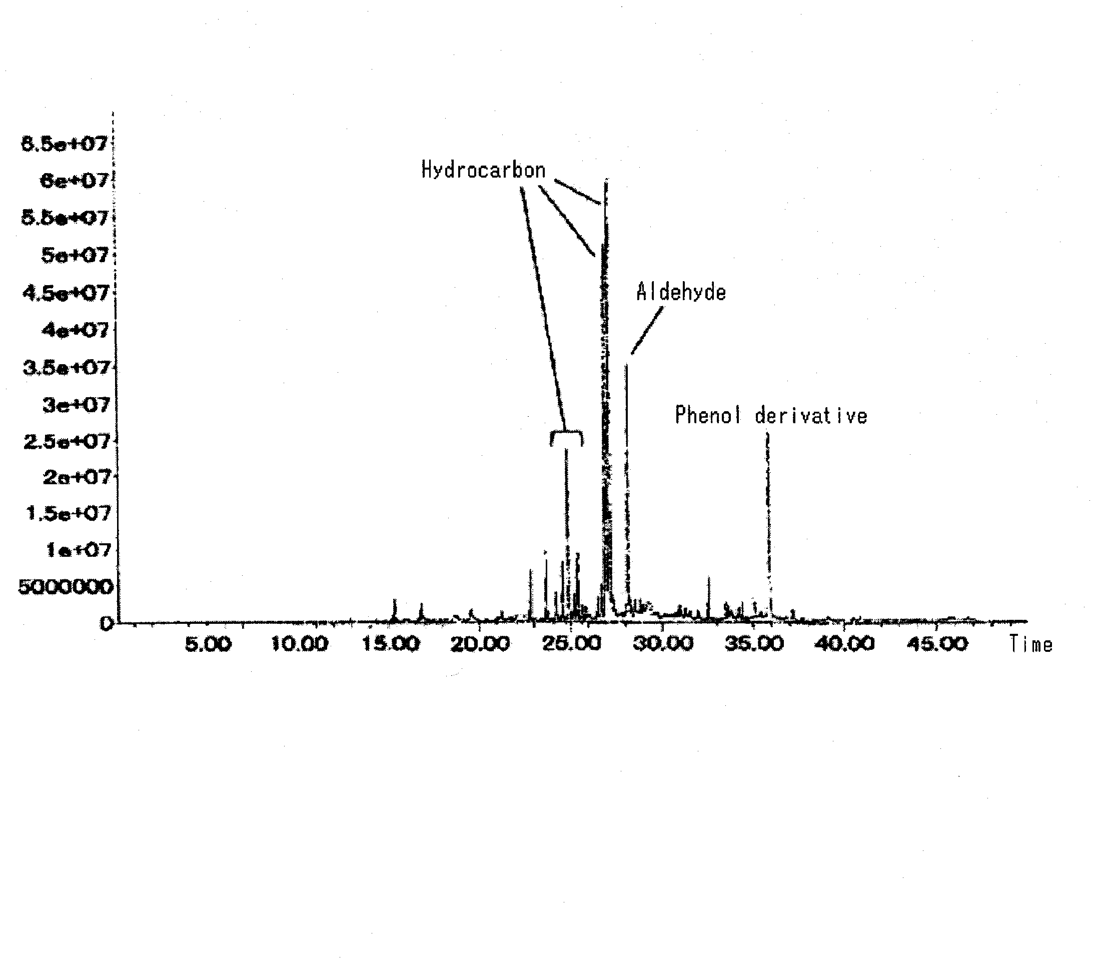

As for aldehyde and phenol derivatives, no component peak was found in Example, whereas remarkable peaks were detected in Comparative Example. Aldehyde and phenol derivatives are components that may irritate eyes. These results revealed that Solid fuel A has better burning performance than Solid fuel B.

### BRIEF DESCRIPTION OF THE DRAWINGS

[FIG. 1] FIG. 1 is a schematic view of a solid fuel production device for effectively implementing the production method.
[FIG. 2] FIG. 2 is a cross-sectional view of an agitation and molding portion making up part of the solid fuel production device.

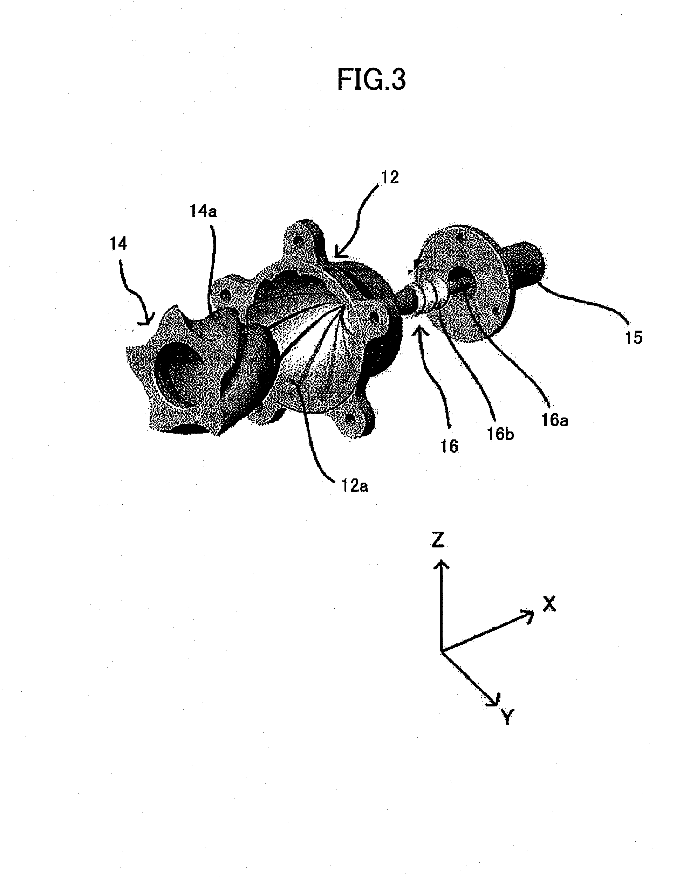

[FIG. 3] FIG. 3 is an exploded perspective view of the agitation and molding portion.

### DESCRIPTION OF SYMBOLS

- 10: agitation and molding portion
- 11: housing body
- 12: edge housing
- 13: fixing bolt
- 14: rotor
- 15: sleeve
- 16: edge screw

## Claims

1. A solid fuel comprising particulate beer lees heat-treated while preventing carbonization.

2. A method of producing a solid fuel, comprising:
a first step of heating beer lees under agitation; and
a second step of heating and compression-molding the beer lees agitated in the first step into a solid fuel shape,
wherein the beer lees are heated while preventing carbonization in the second step.
